# EUROPÄISCHE PATENTANMELDUNG

(11) **EP 2 043 334 A1**
(43) Veröffentlichungstag der Anmeldung: **01.04.2009**
(21) Anmeldenummer: 08015102.0
(22) Anmeldetag: 27.08.2008
(51) Int. Cl.: H04M 1/21, G01S 17/08

(54) **Mobiltelefon mit Entfernungsmessvorrichtung**

(30) Priorität: 28.08.2007 RU 2007132497
(71) Anmelder: Control Ltd., Chelyabinsk 454006 (RU)
(72) Erfinder: Gulunov, Alexey, 454138 Chelyabinsk (RU)
(74) Vertreter: Jeck, Anton

(57) **Zusammenfassung**

Die Erfindung bezieht sich auf ein Mobiltelefon mit zusätzlichen Funktionen, das ein Sendeempfangsgerät für die Sendung und den Empfang lautlicher und informativer Signale aufweist, wobei eine Einheit und ein Mikroprozessor für die Bearbeitung der Signale vorgesehen ist und wobei das Mobiltelefon mit einem Speicher, einem Tastenpaneel, einem Display und einem Akkumulator in einem Gehäuse untergebracht sind. Ist das Mobiltelefon so ausgebildet, dass es ein elektrooptisches Modul für die Messung von Entfernungen, Flächen, Umfänge und dgl. aufweist, das sich bei seiner Arbeit mit der Einheit, dem Tastenpaneel, dem Display, dem Akkumulator und dem Mikroprozessor verbindet, wobei der Mikroprozessor mit der Möglichkeit ausgestattet ist, beim Empfang eines telefonischen Anrufes (Klingelzeichen) die Arbeit des elektrooptischen Moduls unter Erhaltung (Speicherung) der Ergebnisse zu unterbrechen, dann ist eine einfache Laserentfemungsmessung mit dem Mobiltelefon möglich.

## Beschreibung

Die Erfindung bezieht sich auf ein Mobiltelefon nach dem Oberbegriff des Anspruches 1.

Es sind Laserentfernungsmesser mit elektrooptischen Modulen bekannt, die als selbständige Messgeräte Verwendung finden. Das moderne Messgerät, das zum Wechsel beim gewöhnlichen Roulett zum Einsatz kommt, ermöglicht die Lademessungen der Objekte sowohl im Raum als auch außerhalb des Raumes mit hoher Genauigkeit zu messen (Web-Seite www.gsi2000.ru).

Das bekannte Messinstrument hat einen großen Umfang und ein großes Gewicht. Das Messinstrument ständig zu tragen ist umständlich. Außerdem ist der bekannte Laserentfernungsmesser sehr teuer. Ein weiterer Nachteil ist, dass für den Benutzer die Ausrichtung auf das entfernte Ziel nicht sichtbar ist.

Das Mobiltelefon ist ein unzertrennbarer Bestandteil unseres Lebens und ist immer bei uns. Die Attraktivität des Mobiltelefons wird durch verschiedene Zusatzfunktionen erhöht.

Es ist Aufgabe der Erfindung, die Attraktivität des Mobiltelefons durch zusätzliche Funktionen, wie Laserentfernungsmesser, zu erhöhen.

Die gestellte Aufgabe wird durch die Merkmale des Anspruches 1 gelöst.

Weitere zweckmäßige und vorteilhafte Maßnahmen der Erfindung gehen aus den Unteransprüchen hervor.

Ein Ausführungsbeispiel der Erfindung ist in den Zeichnungen dargestellt. Es zeigen:

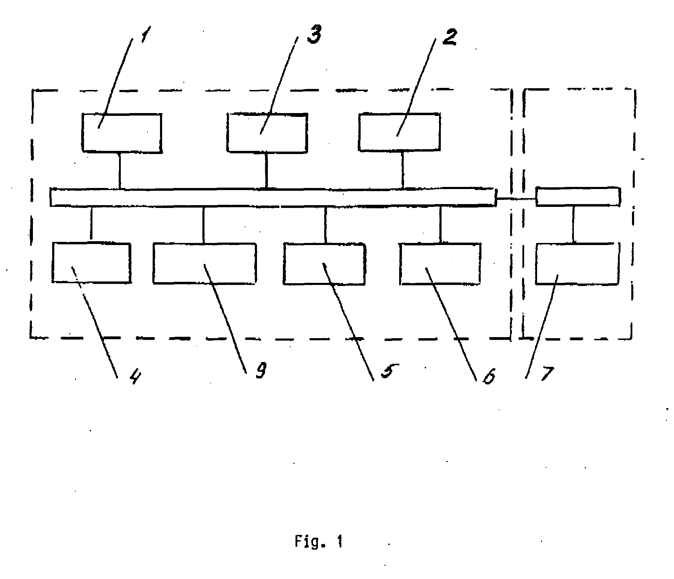

- Fig. 1: die Blockschaltung des Mobiltelefons mit zusätzlichen Funktionen,

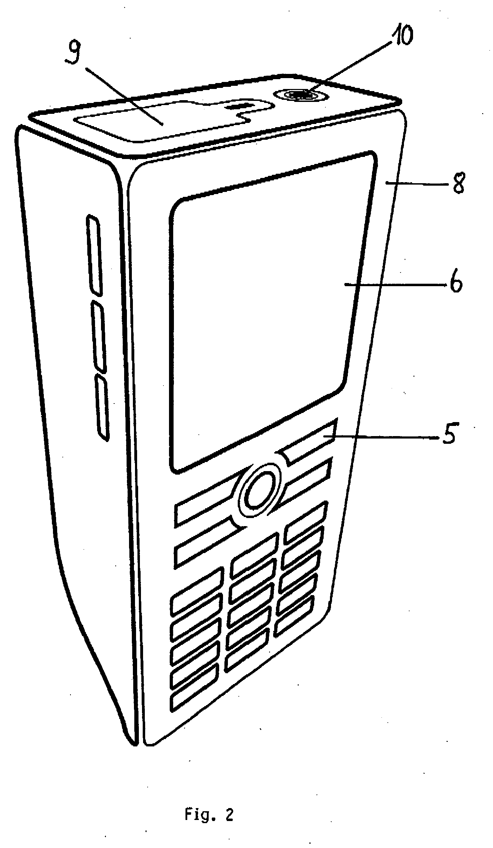

- Fig. 2: die allgemeine Art des Mobiltelefons mit zusätzlichen Funktionen, ausgestattet mit einer Photo-Nideokamera,

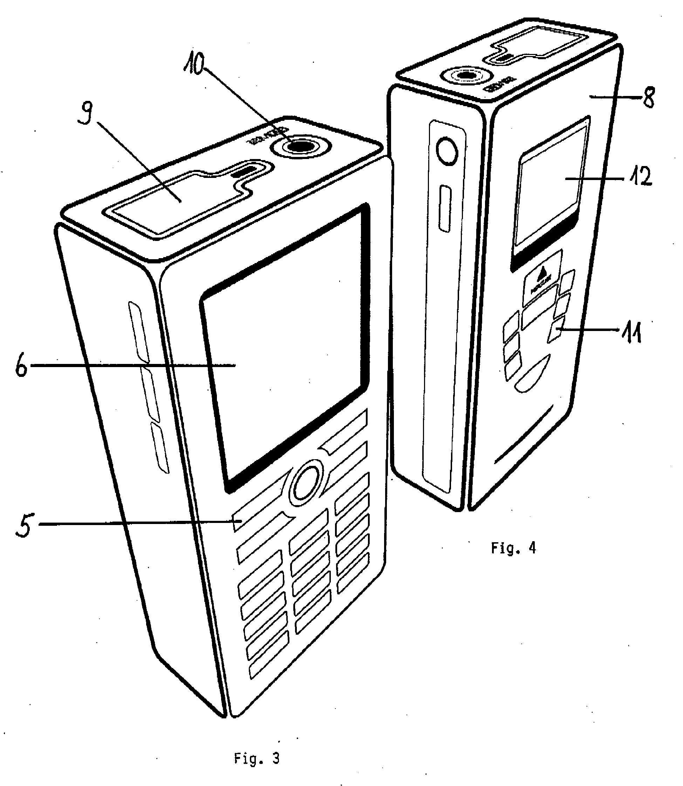

- Fig. 3: die allgemeine Art des Mobiltelefons mit zusätzlichen Funktionen in einem zweiseitigen Gehäuse und
- Fig. 4: die allgemeine Art des Mobiltelefons mit zusätzlichen Funktionen, das ein zweiseitiges Gehäuse in Bezug auf den Laserentfernungsmesser aufweist.

Das Mobiltelefon mit zusätzlichen Funktionen weist ein Sendeempfangsgerät 1 für die Sendung und den Empfang von lautlichen und informativen Signalen auf. Die Einheit 2 bearbeitet die Signale, die sich bei der Arbeit mit dem Sendempfangsgerät 1 und den Mikroprozessor 3 ergeben. Zudem weist das Mobiltelefon den Speicher 4, das Tastenpaneel 5, das Display 6, den Akkumulator 7, das Gehäuse 8 und ein elektrooptisches Modul 9 auf, das für die Messung von Entfernungen, Flächen, Umfänge und dgl. und die Bearbeitung der Messergebnisse vorgesehen ist.

Das Mobiltelefon mit zusätzlichen Funktionen weist eine Photo-Nideokamera 10 auf, deren optische Achse mit der gleichen Achse des elektrooptischen Moduls 9 zusammenfällt. Der Sucher des Moduls 9 ist mit dem Display 6 des Mobiltelefons verbunden, um die Reflexion aufzunehmen und abzubilden. Das aufgenommene Ziel wird zur Entfernungsmessung verwendet.

Das Mobiltelefon mit zusätzlichen Funktionen kann als zweiseitiges Gehäuse 8 mit einem zusätzlichen Tasten paneel 11 und einem zusätzlichen Display 12 ausgebildet sein, wobei das Tastenpaneel 11 und das Display 12 mit dem Modul 9 verbunden sind.

Das Mobiltelefon mit zusätzlichen Funktionen arbeitet bei der Entfernungsmessung wie folgt:
Ist das elektrooptische Modul 9 in einem Gehäuse 8 untergebracht, dann wird mit dem Drücken eines Knopfes das elektrooptische Modul 9 an den Mikroprozessor 3 angeschlossen. Das Sendempfangsgerät 1, die Einheit 2 zur Bearbeitung des Signale, das Tastenpaneel 5, das Display 6 und der Akkumulator 7 werden aktiviert und beginnen mit den Operationen, die der Laserentfernungsmessung eigen sind. Im Falle des Einganges eines telefonischen Anrufes (Klingelzeichen) unterbricht der Mikroprozessor 3 die Arbeit des elektrooptischen Moduls 9 und gibt ein Kommando an den Speicher 3 zur Erhaltung (Speicherung) der Ergebnisse der Arbeit des elektrooptischen Moduls 9.
Bei der Verwendung des elektrooptischen Moduls 9 in einem vom Gehäuse 8 getrennten Bauteil, wird das Kommando zur Ausführung der Arbeiten zuerst an das Bauteil mit dem elektrooptischen Modul 9 gegeben und danach die Arbeit wie vorher beschrieben fortgesetzt.
Bei der Verwendung des Mobiltelefons mit einer Photo-Nideokamera wird das Ziel, bis zu dem die Entfernung zu messen ist, auf dem Display 6 des Mobilteleföns angezeigt.
Ist das Mobiltelefon mit zusätzlichen Funktionen in einem zweiseitigen Gehäuse 8 mit zusätzlichem Tastenpaneel 11 und zusätzlichem Display 12 untergebracht, dem sind diese nur mit dem elektrooptischen Modul 9 verbunden. Für das Haupt-Tastenpaneel 5 entfällt die Forderung mehrfunktional zu sein. Der Prozess der Verwendung des Mobiltelefons mit zusätzlichen Funktionen zur Laserentfemungsmessung wird daher vereinfacht.

## Patentansprüche

1. Mobiltelefon mit zusätzlichen Funktionen, das ein Sendeempfangsgerät (1) für die Sendung und den Empfang lautlicher und informativer Signale aufweist, wobei eine Einheit (2) und ein Mikroprozessor (3) für die Bearbeitung der Signale vorgesehen ist und wobei das Mobiltelefon mit einem Speicher (4), einem Tastenpaneel (5), einem Display (6) und einem Akkumulator (7) in einem Gehäuse (8) untergebracht sind,
**dadurch gekennzeichnet,**
**dass** es ein elektrooptisches Modul (9) für die Messung von Entfernungen, Flächen, Umfänge und dgl. aufweist, das sich bei seiner Arbeit mit der Einheit (2), dem Tastenpaneel (5), dem Display (6), dem Akkumulator (7) und dem Mikroprozessor (3) verbindet, wobei der Mikroprozessor (3) mit der Möglichkeit ausgestattet ist, beim Empfang eines telefonischen Anrufes (Klingelzeichen) die Arbeit des elektrooptischen Moduls (9) unter Erhaltung (Speicherung) der Ergebnisse zu unterbrechen.

2. Mobiltelefon nach Anspruch 1,
**dadurch gekennzeichnet,**
**dass** es eine Photo-/Videokamera (10) aufweist, deren optische Achse mit der gleichen Achse des elektrooptischen Moduls (9) zusammenfällt und
**dass** der Sucher der Photo-/Videokamera (10) mit dem Display (6) verbunden ist, dass das durch Reflexion und Fotografieren erhaltende Ziel bis zur Messung der Entfernung festhält.

3. Mobiltelefon nach Anspruch 1,
**dadurch gekennzeichnet,**
**dass** das elektrooptische Modul (9) in einem getrennten, abnehmbaren Gehäuse untergebracht ist.

4. Mobiltelefon nach Anspruch 1,
**dadurch gekennzeichnet,**
**dass** das elektrooptische Modul (9) in einem zweiseitigen Gehäuse (8) untergebracht ist, das ein zusätzliches Tastenpaneel (11) und ein zusätzliches Display (12) aufweist, und
**dass** das zusätzliche Tastenpaneel (11) und das zusätzliche Display (12) mit dem elektrooptischen Modul (9) verbunden sind.
